# EUROPÄISCHE PATENTSCHRIFT

(11) **EP 0 956 251 B1**
(45) Veröffentlichungstag und Bekanntmachung des Hinweises auf die Patenterteilung: **04.10.2001**
(21) Anmeldenummer: 98900071.6
(22) Anmeldetag: 15.01.1998
(51) Int. Cl.: B65G 27/00, B65G 27/34, B65G 47/244

(54) **VORRICHTUNG ZUM TRANSPORTIEREN VON PRODUKTEN**
DEVICE FOR TRANSPORTING PRODUCTS
DISPOSITIF DE TRANSPORT DE PRODUITS

(30) Priorität: 28.01.1997 CH 17997
(43) Veröffentlichungstag der Anmeldung: 17.11.1999
(73) Patentinhaber: SIG Pack Systems AG, 8222 Beringen (CH)
(72) Erfinder: RUF, Lorenz, Stefan, CH-8213 Neunkirch (CH); FREI, Peter, CH-8427 Freienstein (CH); WIESENDANGER, Markus, CH-8053 Zürich (CH)
(74) Vertreter: Münch, Otto, Dipl.-Ing.
(86) Internationale Anmeldenummer: CH9800013
(87) Internationale Veröffentlichungsnummer: WO9832679

(56) Entgegenhaltungen:
- EP-A- 0 563 824
- GB-A- 2 259 900
- US-A- 3 174 613

## Beschreibung

Aus der US-A-3 174 613 ist eine Transportvorrichtung bekannt, bei welcher zwischen zwei voneinander beabstandeten Förderbändern mit gleicher Förderrichtung mehrere Reihen von Rollen mit pro Reihe jeweils parallelen, horizontalen Rollenachsen angeordnet sind. Die Rollen sind entweder mit der Umlaufgeschwindigkeit der Förderbänder oder mit einer um einen Faktor 1,4 höheren Geschwindigkeit angetrieben. Ihre obere, gemeinsame Tangentialebene entspricht der Oberseite der Förderbänder. Die Achsen der Rollen jeder Reihe können gemeinsam um 45° aus einer Grundposition geschwenkt werden, in welcher sie senkrecht zur Förderrichtung der Förderbänder sind. In dieser ausgeschwenkten Lage fördern die Rollen die vom ersten Förderband angelieferten Produkte, nämlich Glastafeln, auf ein Querförderband.

Aus der GB-A-2 259 900 ist eine Fördervorrichtung gemäss Oberbegriff der Ansprüche 1 und 2 bekannt, bei der die Produkte auf einem annähernd horizontalen Tisch in einer der vier wählbaren Richtungen transportiert werden können. Der Tisch besteht aus einer Vielzahl nebeneinander angeordneter Tischelemente, die translatorisch in beiden Richtungen parallel zur Tischebene synchron hin und her schwingen. Jedes Tischelement ist zusätzlich in Vertikalrichtung oszillatorisch angetrieben, wobei diese Vertikalschwingungen mit den Horizontalschwingungen synchronisiert sind.

Der vorliegenden Erfindung liegt die Aufgabe zugrunde, eine Vorrichtung der obigen Art zu schaffen, die bei einfachem Aufbau eine einfache Anpassung der Transportgeschwindigkeit ermöglicht. Diese Aufgabe wird durch die Merkmalskombination der Ansprüche gelöst.

Dadurch, dass die Vertikalschwingung jedes Tischelementes in der Phase gegenüber den Horizontalschwingungen einstellbar ist, können die Produkte auf jedem Tischelement in einer beliebig wählbaren Richtung transportiert werden. Durch den gemeinsamen Antrieb sämtlicher Tischelemente in der Horizontalebene kann z.B. bei Änderung der Schwingungsfrequenz oder der Schwingungsamplitude bei gleichbleibender Vertikal-Schwingungsamplitude für alle Tischelemente gleichzeitig die Transportgeschwindigkeit über den ganzen Tisch auf einfache Weise geändert werden. Bei der individuellen Einstellbarkeit der Hubamplituden der Tischelemente kann auch innerhalb des Tisches die Transportgeschwindigkeit einfach geändert werden.

Nachfolgend werden Ausführungsbeispiele der Erfindung anhand der Zeichnungen erläutert. Darin zeigt:
- Figur 1: Eine schematische Draufsicht auf eine Fördervorrichtung,
- Figur 2: einen Ausschnitt aus der Darstellung nach Figur 1,
- Figur 3: einen Teilquerschnitt durch eine erste Ausführungsform,
- Figur 4: eine Variante der Ausführungsform nach Figur 3,
- Figur 5: eine schematische Darstellung der Wirkungsweise,
- Figur 6: einen Querschnitt durch eine zweite Ausführungsform,
- Figur 7: ein vergrösserter Ausschnitt aus der Darstellung nach Figur 6, und
- Figur 8: eine Draufsicht.

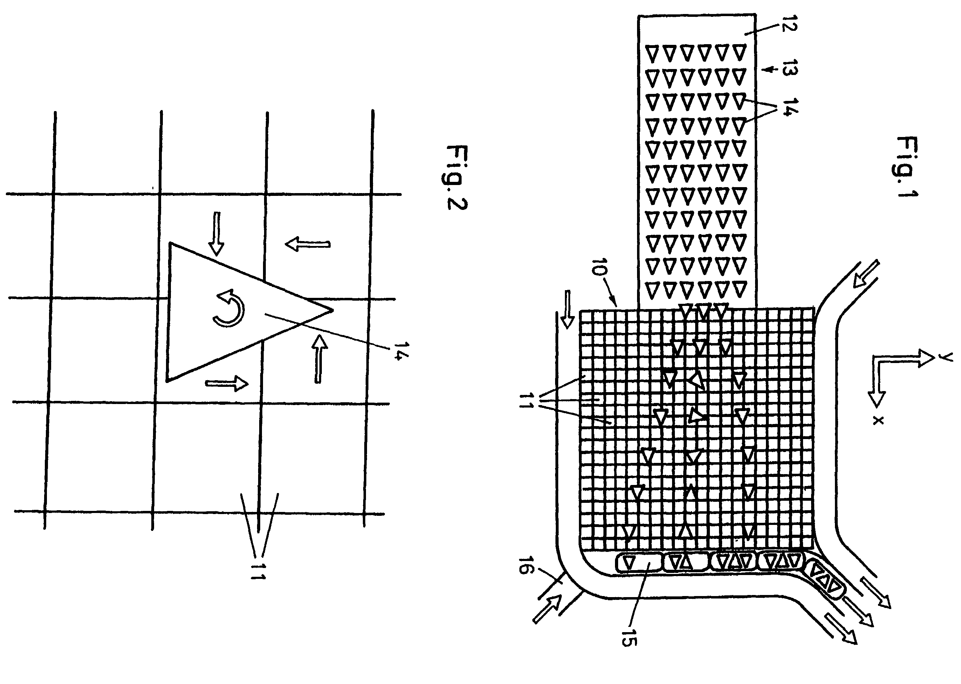

In Figur 1 ist die Vorrichtung schematisch im Grundriss in der Anwendung in einer Verpackungsmaschine dargestellt. Die Vorrichtung besteht aus einem horizontalen quadratischen Tisch 10, der aus einer Vielzahl mit geringem Abstand nebeneinander angeordneter, quadratischer Tischelemente 11 besteht. Mittels eines Förderbandes 12 werden dem Tisch 10 Reihen 13 von Produkten 14 angeliefert. Auf dem Tisch 10 werden die Produkte 14 in x-Richtung gefördert und in y-Richtung verteilt und allenfalls gedreht, um sie am rechten Tischrand in Verpackungsbehälter 15 einzufüllen. Die Behälter 15 werden über einen separaten Förderer 16 zugeführt und anschliessend zur Weiterverpackung abtransportiert. Jedes Element 11 kann ein auf ihm aufliegendes Produkt in jeder beliebigen Richtung transportieren. Liegt ein Produkt 14 auf mindestens zwei Elementen auf, so kann es bei entsprechender Wahl der Transportrichtung dieser Elemente auch gedreht werden (Figur 2). Der Grundriss der Elemente 11 muss nicht unbedingt quadratisch sein. Er kann auch rechteckig, dreieckig oder sechseckig sein. Auch andere polygonale Formen sind möglich, nur sind die Elemente 11 in diesem Fall nicht einheitlich.

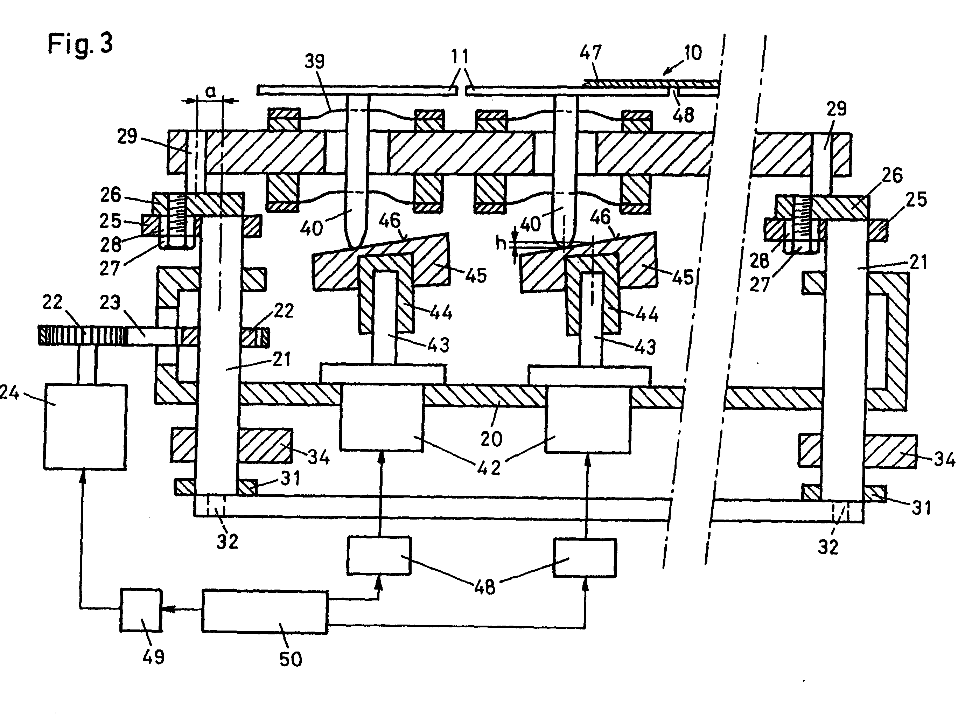

In Figur 3 ist ein Querschnitt durch einen Teil einer ersten Ausführungsform dargestellt. Auf einem Gestell 20 sind zwei Antriebswellen 21 mit vertikaler Achse drehbar und axial unverschiebbar gelagert. Die eine Welle 21 ist über Riemenscheiben 22 und einen Zahnriemen 23 über eine Steuerung 49 durch einen drehzahlregelbaren Antriebsmotor 24 angetrieben. Am oberen Ende der Wellen 21 ist ein Führungsglied 25 befestigt. Auf dem Führungsglied 25 ist ein Schlitten 26 quer zur Achse der Wellen 21 verschiebbar geführt und mittels Schrauben 27 arretierbar, welche Längsschlitze 28 des Gliedes 25 durchgreifen. Die Schlitten 26 tragen je einen zu den Wellen 21 parallelen Exzenterzapfen 29. Durch Lösen der Schrauben 27 und Verschieben der Schlitten 26 kann die Exzentrizität a der Zapfen 29 eingestellt werden. Die Zapfen 29 sind in einer gemeinsamen, horizontalen Tragplatte 30 drehbar gelagert. Am unteren Ende ist an den Wellen 21 je ein Flansch 31 befestigt, welcher einen weiteren, nicht verstellbaren Exzenterzapfen 32 trägt. Die Exzentrizität dieser Zapfen 32 ist um 90° gegenüber jener der Zapfen 29 versetzt. Die Zapfen 32 sind in einer Koppelstange 33 drehbar gelagert. Dadurch sind die beiden Wellen 21 drehfest miteinander verbunden. Bei laufendem Motor 24 führt die Tragplatte 30 eine kreisende Bewegung in ihrer Ebene aus. An den Wellen 21 ist noch je eine Exzentermasse 34 befestigt, um die Umwucht durch die Tragplatte 30 auszugleichen.

Jedes Tischelement 11 ist mittels Blattfedern 39 vertikal parallel zu sich selbst verschiebbar an der Platte 30 befestigt. Von jedem Element 11 steht im Zentrum ein Stössel 40 mit einer kalottenförmigen Stirnfläche 41 ab. Um das Mass a der Exzentrizität der Zapfen 29 seitlich versetzt zur Achse des Stössels 40 ist je ein Servomotor oder Schrittmotor 42 am Gestell 20 befestigt. Der Motor 42 hat eine vertikale Abtriebswelle 43. Auf der Welle 43 ist ein zylindrischer Zapfen 44 mit einer zur Achse der Welle 43 geneigten Achse befestigt. Auf dem Zapfen 44 ist ein zylindrischer Schuh 45 koaxial befestigt. Der Schuh 45 hat eine schräge, ebene Stirnfläche 46, auf welcher die Fläche 41 des Stössels 40 aufliegt. Der Winkel, welchen die Fläche 46 mit einer Radialebene des Schuhs 45 einschliesst, entspricht dem Winkel, unter welchem sich die Achsen der Welle 43 und des Zapfens 44 kreuzen. Durch Verdrehen des Schuhs 45 gegenüber dem Zapfen 44 lässt sich daher die Neigung der Fläche 46 gegenüber einer Horizontalebene von 0 bis zum dargestellten Maximalwert einstellen. Jeder Motor 42 ist durch eine Steuerung 48 individuell ansteuerbar, so dass die Flächen 46 individuell in einer wählbaren Richtung geneigt sind. Die Steuerungen 48, 49 werden durch eine gemeinsame Steuereinrichtung 50 gesteuert. Die Oberfläche des Tisches 10 kann noch durch eine dünne, biegsame Platte 47, zum Beispiel eine Folie aus Polyurethan oder einem anderen Kunststoff überdeckt sein, welche die Zwischenräume 48 zwischen den Tischelementen 11 überbrückt. Dadurch wird die Verschmutzungsgefahr reduziert.

Die Wirkungsweise der beschriebenen Vorrichtung ist wie folgt: Der Motor 24 dreht mit der eingestellten, konstanten Drehzahl von zum Beispiel 10 bis 30 Hz, so dass die Tischelemente 11 eine kreisende Bewegung in ihrer Ebene ausführen, zum Beispiel mit einem Radius von 5 mm. Wegen der Neigung der Flächen 46 führen sie synchron dazu eine periodische Hubbewegung von zum Beispiel 1,8 mm Amplitude h aus. Die Frequenz, der Radius a und der Hub h sind so gewählt, dass die Beschleunigung der Tischelemente 11 nach unten zumindest im Bereich des oberen Totpunktes der Hubschwingung grösser als die Erdbeschleunigung ist, so dass das Produkt periodisch vom betreffenden Element 11 abhebt. Weil sich das Element 11 wegen der Kreiselbewegung unter dem Produkt 14 wegverschoben hat, bis dieses wieder auf dem Element aufliegt, verschiebt es sich relativ zum Element, führt also eine translatorische Bewegung auf dem Tisch 10 durch. Durch Drehen des Schuhs 45 um die Achse der Welle 43 kann die Bewegungsrichtung beliebig gewählt werden. Sie kann in unterschiedlichen Sektoren des Tisches 10 unterschiedlich sein. Es ist zum Beispiel möglich, die Produkte 14 auf dem Tisch 10 auf einer Kreisbahn zu bewegen. Wenn einer der Motoren 42 synchron mit den Wellen 21 dreht, steht das Produkt auf dem betreffenden Element 11 still, weil dann die Vertikalschwingung aufhört. Die Geschwindigkeit der Bewegung hängt von der Drehzahl des Motors 24, der Exzentrizität a und der Hubamplitude h ab. Bei Erhöhung der Drehzahl und/oder der Exzentrizität a und/oder der Hubamplitude h wird die Geschwindigkeit grösser. Die Hubamplitude h kann aber auch so klein gewählt werden, dass die Produkte nicht von der Oberfläche der Elemente 11 abheben. Die Frequenz und Exzentrizität a wird in diesem Fall so eingestellt, dass die Produkte 14 mindestens phasenweise, nämlich bei der Beschleunigung der Elemente 11 nach unten, auf der Oberfläche der Elemente 11 rutschen. Bei der Beschleunigung nach oben ist die Reibkraft zwischen den Elementen 11 und dem Produkt 14 grösser als bei der Beschleunigung nach unten, so dass auch in diesem Fall eine translatorische Bewegung der Produkte 14 auf dem Tisch 10 erfolgt.

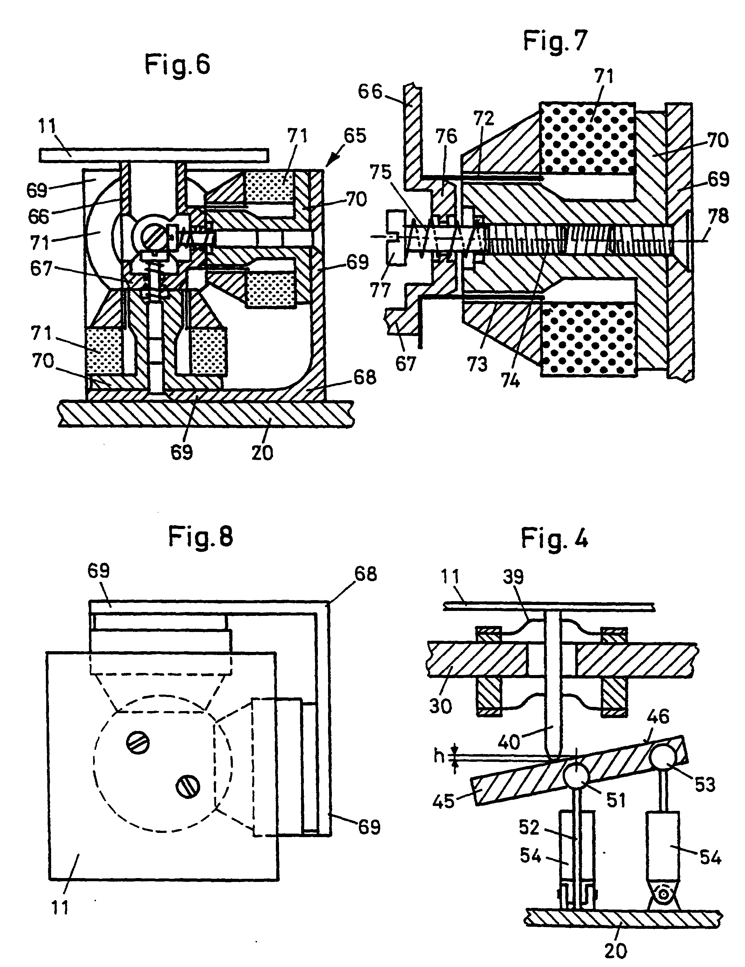

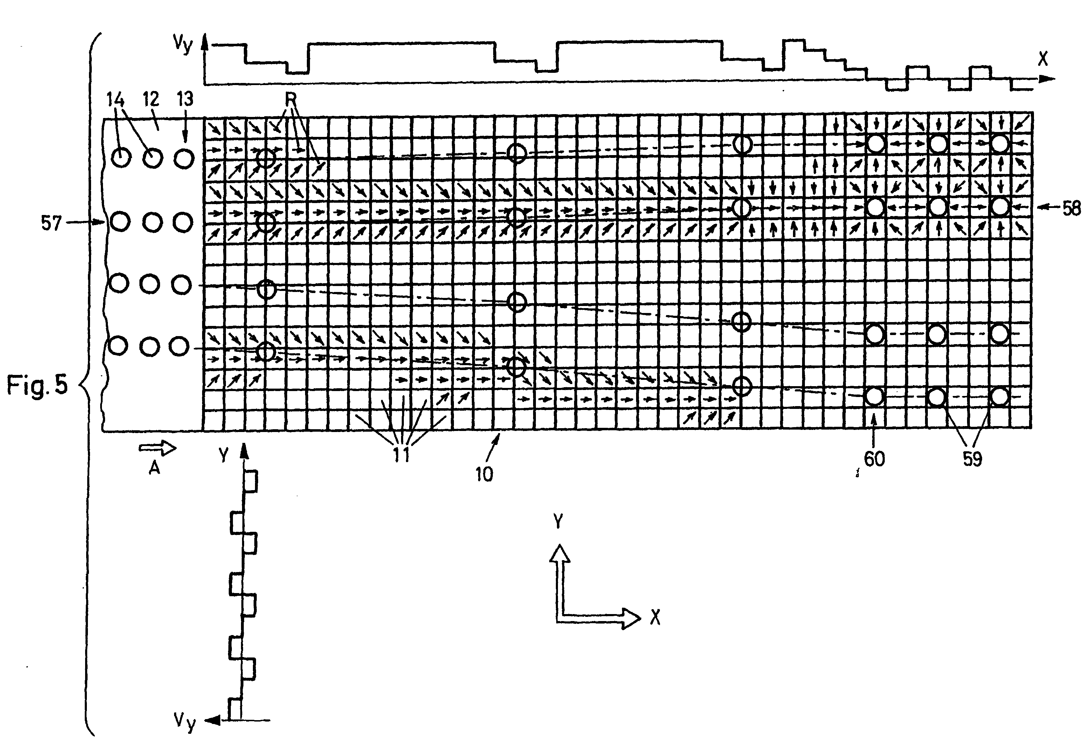

In Figur 4 ist eine Variante der Betätigung des Schuhs 45 dargestellt. Der Schuh 45 ist in diesem Fall eine kreisförmige Scheibe, die im Zentrum auf einem Kugelgelenk 51 gelagert ist. Das Gelenk 51 ist auf einem am Gestell 20 befestigten Ständer 52 angebracht. An der Peripherie des Schuhs 45 sind um 90° gegeneinander versetzt zwei weitere Kugelgelenke 53 angeordnet, welche durch je ein Linear-Hubelement 54 in der Höhe verstellbar sind. Die Hubelemente 54 sind schwenkbar am Gestell 20 gelagert. Sie können zum Beispiel als Schrittmotoren mit Gewindespindeln oder als Linearmotoren mit Wegrückführung ausgebildet sein. Diese Variante hat den Vorteil, dass nicht nur die Richtung, sondern auch der Betrag der Neigung der Fläche 46, also die Hubamplitude h individuell für jedes Tischelement 11 einstellbar ist. Damit können auf dem Tisch 10 unterschiedliche Geschwindigkeiten der Produkte 14 in verschiedenen Sektoren vorgegeben werden.

Abweichend von der in Figur 4 dargestellten Ausführungsform kann die Gleitfläche 46 des Schuhs 45 auch horizontal und der Schuh 45 vertikal verschiebbar geführt sein. Er wird in diesem Fall durch ein einziges Linear-Hubelement 54 vertikal synchron mit den Horizontalschwingungen mit einer einstellbaren Amplitude und einstellbarer Phasenlage bezüglich der Schwingung in x-Richtung schwingend durch das Hubelement 54 angetrieben.

Figur 5 zeigt ein Anwendungsbeispiel dieser Variante zum Verteilen und Gruppieren der vom Band 12 angelieferten Produkte 14.

Die durchschnittliche Fördergeschwindigkeit vₓ auf dem Tisch 10 in Transportrichtung A des Bandes 12 ist grösser als die Bandgeschwindigkeit. Die Produkte werden in vier Kolonnen 57 angeliefert, welche durch geeignete Wahl der Förderrichtung der Tischelemente 11 auf dem Tisch 10 reihenweise seitlich in Tischkolonnen 58 verschoben werden. Jeweils rechts und links einer dieser Kolonnen 58 hat die Transportrichtung R der Elemente 11 eine gegen diese Kolonne 58 gerichtete Komponente. Die Produkte 14 werden am rechten Rand des Tisches 10 auf zwei Gruppen zu je sechs Feldern 59 (gebildet durch je ein Element 11) gruppiert. Die Transportrichtung der diese Felder 59 unmittelbar umgebenden Elemente 11 ist radial auf diese Felder gerichtet. Die Transportgeschwindigkeit der Felder 59 ist 0. Sobald eine Gruppe 60 komplett ist, wird sie zum Beispiel mittels eines Sauggreifers zur Verpackung abtransportiert. Zwischen dem linken Rand des Tisches 10 und den zu bildenden Gruppen 60 werden die Reihen 13 mit Wanderwellen in x-Richtung bewegt. An der jeweiligen Sollstellung der Reihe 13 transportieren die Elemente 11 mit der Sollgeschwindigkeit in x-Richtung. Die unmittelbar rechts davon liegenden Elemente 11 transportieren langsamer, jene links davon schneller. Dadurch ist es möglich, die Reihen 13 auf den Tisch 10 ausgerichtet zu halten und auszurichten, falls sie unausgerichtet vom Band 12 angeliefert werden. Vorzugsweise wird die Vorrichtung durch eine über dem Tisch 10 angeordnete, nicht dargestellte optische Erkennungseinrichtung gesteuert.

In Figuren 6 bis 8 ist eine weitere Ausführungsform der Erfindung dargestellt. Auf dem Gestell 20 ist für jedes Tischelement 11 ein eigener Antrieb 65 montiert. Am plattenförmigen Tischelement 11 ist unten zentrisch ein quadratisches Rohr 66 mit einem ebenen Boden 67 montiert. Das Rohr 66 ist umgeben von einem würfelförmigen Träger 68 mit drei senkrecht zueinanderstehenden Wänden 69. Der Träger 68 ist auf dem Gestell 20 montiert. An jeder Wand 69 ist ein ferromagnetischer Anker 70 mit einer Spule 71 befestigt. Je eine am Rohr 66 bzw. am Boden 67 befestigte Tauchspule 72 taucht in einen zylindrischen Luftspalt 73 des Ankers 70 ein. Koaxial ist in den Anker 70 eine Schraube 74 eingeschraubt. Auf die Schraube 74 sind zwei Druckfedern 75 mit Vorspannung aufgesetzt, die sich einerseits an einem Vorsatz 76 des Rohres 66 bzw. am Boden 67, andererseits am Schraubenkopf 77 bzw. am Anker 70 abstützen. Damit ist das Tischelement 11 in seiner Mittellage positioniert.

An die drei Tauchspulen 72 wird ein Wechselstrom angelegt mit einer wählbaren, gleichen Frequenz. Die Phasenlage und die Amplitude der Wechselspannung ist individuell zwischen den drei Spulen 73 einstellbar. Ist zum Beispiel für die beiden Spulen 72 mit horizontaler Achse 78 die Amplitude gleich und die Phase um 90° verschoben, führt das Tischelement wiederum eine kreisförmige Bewegung parallel zu sich selbst aus. Je nach Phasenlage und Amplitude der Spule 72 mit vertikaler Achse kann damit die Transportrichtung und -geschwindigkeit der Produkte 14 eingestellt werden. Bei dieser Ausführungsform kann statt der kreisförmigen auch eine elliptische oder eine lineare, horizontale Schwingung des Tischelementes 11 erzielt werden, je nach Phasenlage und Amplitudenverhältnis der an die Spulen 72 mit horizontaler Achse angelegten Spannung.

Die drei Tauchspulenanordnungen 70 bis 75 können auch ersetzt werden durch drei Linearmotoren mit Wegrückführung. Dies hat den Vorteil, dass die Schwingungsamplituden unabhängig sind vom Gewicht oder der Anwesenheit der Produkte 14. Dies ist besonders vorteilhaft beim Übergang eines Produktes 14 zwischen zwei Tischelementen 11.

## Patentansprüche

1. Vorrichtung zum Fördern von Produkten in einer wählbaren Richtung (x, y), mit einem angenähert horizontalen Tisch (10), der eine Vielzahl von nebeneinander angeordneten Tischelementen (11) aufweist, wobei jedes Tischelement (11) translatorisch in beiden Richtungen (x, y) parallel zur Tischebene hin- und herschwingend durch einen Antrieb (21-24; 65) angetrieben ist und die Schwingungen in den beiden Richtungen (x, y) miteinander synchronisiert sind, und wobei jedes Tischelement (11) zusätzlich in Vertikalrichtung (z) oszillatorisch angetrieben ist, und diese Vertikalschwingung mit den Horizontalschwingungen synchronisiert ist, **dadurch gekennzeichnet, dass** die Vertikalschwingung jedes Tischelementes (11) in der Phase gegenüber den Horizontalschwingungen einstellbar ist, und **dass** die Hubamplitude (h) der Vertikalschwingung für jedes Tischelement (11) einzeln einstellbar ist.

2. Vorrichtung zum Fördern von Produkten in einer wählbaren Richtung (x, y), mit einem angenähert horizontalen Tisch (10), der eine Vielzahl von nebeneinander angeordneten Tischelementen (11) aufweist, wobei jedes Tischelement (11) translatorisch in beiden Richtungen (x, y) parallel zur Tischebene hin- und herschwingend durch einen Antrieb (21-24; 65) angetrieben ist und die Schwingungen in den beiden Richtungen (x, y) miteinander synchronisiert sind, und wobei jedes Tischelement (11) zusätzlich in Vertikalrichtung (z) oszillatorisch angetrieben ist, und diese Vertikalschwingung mit den Horizontalschwingungen synchronisiert ist, **dadurch gekennzeichnet, dass** die Vertikalschwingung jedes Tischelementes (11) in der Phase gegenüber den Horizontalschwingungen einstellbar ist, und **dass** alle Tischelemente (11) an einem Träger (30) vertikal verschiebbar gelagert sind und der Träger (30) durch einen gemeinsamen Antrieb (21-24) in beiden horizontalen Richtungen (x, y) oszillatorisch angetrieben ist.

3. Vorrichtung nach Anspruch 2, wobei der Antrieb (21-24) mindestens zwei vertikale Antriebswellen (21) umfasst, auf welchen der Träger (30) exzentrisch gelagert ist.

4. Vorrichtung nach Anspruch 2 oder 3, wobei von jedem Tischelement (11) ein Stössel (40) senkrecht nach unten absteht, dessen Stirnende (41) auf einer zur Ebene des Tisches (10) geneigten Fläche (46) eines Tragelementes (45) aufliegt, und wobei die Richtung der Fallinie der Fläche (46) einstellbar ist. '

5. Vorrichtung nach einem der Ansprüche 2 bis 4, wobei die Hubamplitude (h) der Vertikalschwingung für jedes Tischelement (11) einzeln einstellbar ist.

6. Vorrichtung nach Anspruch 1, wobei jedes Tischelement (11) einen eigenen Antrieb (65) aufweist.

7. Vorrichtung nach einem der Ansprüche 1 bis 6, wobei der Schwingungshub (a) in beiden horizontalen Richtungen (x, y) gleich und vorzugsweise einstellbar ist.

8. Vorrichtung nach einem der Ansprüche 1 bis 7, wobei die Schwingungen in den beiden horizontalen Richtungen (x, y) um 90° gegeneinander phasenverschoben sind, so dass die Tischelemente (11) eine kreisende Bewegung ausführen.

9. Vorrichtung nach einem der Ansprüche 1 bis 8, wobei die Frequenz der Schwingungen einstellbar ist.

10. Vorrichtung nach einem der Ansprüche 1 bis 9, wobei die Tischelemente (11) einen dreieckigen, rechteckigen oder sechsekkigen Grundriss haben.

11. Vorrichtung nach einem der Ansprüche 1 bis 10, wobei sämtliche Tischelemente (11) durch ein gemeinsames, flexibles Deckblatt (47), insbesondere eine Kunststoff-Folie, abgedeckt sind, welches die Zwischenräume (48) zwischen den Tischelementen (11) überdeckt.

## Claims

1. Device for conveying products in a chosen direction (x, y), with an approximately horizontal table (10) which has a plurality of table elements (11) arranged side by side, wherein each table element (11) is driven by a drive (21-24; 65) translatorily in both directions (x, y) parallel to the plane of the table so as to oscillate forwards and backwards and the oscillations in the two directions (x, y) are synchronised with one another, and wherein each table element (11) is additionally driven so as to oscillate in the vertical direction (z) and this vertical oscillation is synchronised with the horizontal oscillations, **characterised in that** the vertical oscillation of each table element (11) is adjustable in the phase opposite the horizontal oscillations and the stroke amplitude (h) of the vertical oscillation is individually adjustable for each table element (11).

2. Device for conveying products in a chosen direction (x, y), with an approximately horizontal table (10) which has a plurality of table elements (11) arranged side by side, wherein each table element (11) is driven by a drive (21-24; 65) translatorily in both directions (x, y) parallel to the plane of the table so as to oscillate forwards and backwards and the oscillations in the two directions (x, y) are synchronised with one another and wherein each table element (11) is additionally driven so as to oscillate in the vertical direction (z) and this vertical oscillation is synchronised with the horizontal oscillations, **characterised in that** the vertical oscillation of each table element (11) is adjustable in the phase opposite the horizontal oscillations and all the table elements (11) are supported as vertically displaceable on a carrier (30) and the carrier (30) is driven by a common drive (21, 24) so as to oscillate in both horizontal directions (x, y).

3. Device according to Claim 2, wherein the drive (21-24) comprises at least two vertical drive shafts (21) on which the carrier (30) is supported excentrically.

4. Device according to Claim 2 or 3, wherein from each table element (11) a ram (40) stands away vertically downwards, the front end (41) of which is supported on a face (46) of a carrying element (45) inclined towards the plane of the table (10) and wherein the direction of the line of slope of the face (46) is adjustable.

5. Device according to one of Claims 2 to 4, wherein the stroke amplitude (h) of the vertical oscillation is individually adjustable for each table element (11).

6. Device according to Claim 1, wherein each table element (11) has its own drive (65).

7. Device according to one of Claims 1 to 6, wherein the oscillation stroke (a) is identical in both horizontal directions (x, y) and preferably adjustable.

8. Device according to one of Claims 1 to 7, wherein the oscillations in the two horizontal directions (x, y) are out of phase to one another by 90°, so the table elements (11) carry out a circular movement.

9. Device according to one of Claims 1 to 8, wherein the frequency of the oscillations is adjustable.

10. Device according to on of Claims 1 to 9, wherein the table elements (11) have a triangular, rectangular or hexagonal horizontal projection.

11. Device according to one of Claims 1 to 10, wherein all the table elements (11) are covered by a common, flexible covering sheet (47), in particular a plastics material foil, which overlaps the intermediate spaces (48) between the table elements (11).

## Revendications

1. Dispositif de transport de produits, dans une direction (x, y) pouvant être sélectionnée, avec une table (10) à peu près horizontale, présentant une pluralité d'éléments de table (11) disposés les uns à côté des autres, chaque élément de table (11) étant entraîné en translation dans les deux directions (x, y) par un dispositif d'entraînement (21 à 24; 65), provoquant un mouvement oscillatoire dans un sens et dans l'autre, parallèlement au plan de la table, et les oscillations effectuées dans les deux directions (x, y) étant synchronisées ensembles, et dans lequel chaque élément de table (11) est en outre entraîné selon un mouvement oscillatoire en direction verticale (z), et dans lequel ce mouvement oscillatoire vertical est synchronisé par rapport aux mouvements oscillatoires horizontaux, **caractérisé en ce que** le mouvement oscillatoire vertical est réglable en phase par rapport aux mouvements oscillatoires horizontaux de chaque élément de table (11), et **en ce que** l'amplitude de course (h) du mouvement oscillatoire vertical de chaque élément de table (11) est réglable individuellement.

2. Dispositif de transport de produits, dans une direction (x, y) pouvant être sélectionnée, avec une table (10) à peu près horizontale, présentant une pluralité d'éléments de table (11) disposés les uns à côté des autres, dans lequel chaque élément de table (11) est entraîné en translation dans les deux directions (x, y) par un dispositif d'entraînement (21 à 24; 65), provoquant un mouvement oscillatoire dans un sens et dans l'autre, parallèlement au plan de la table, et dans lequel les oscillations effectuées dans les deux directions (x, y) sont synchronisées ensemble, et chaque élément de table (11) est en outre entraîné selon un mouvement oscillatoire en direction verticale (z), et ce mouvement oscillatoire vertical est synchronisé envers les mouvements oscillatoires horizontaux, **caractérisé en ce que** le mouvement oscillatoire vertical est réglable en phase par rapport aux mouvements oscillatoires horizontaux de chaque élément de table (11), et **en ce que** tous les éléments de table (11) sont montés de façon déplaçable verticalement sur un support (30), et le support (30) est entraîné en un mouvement oscillatoire dans les deux directions horizontales (x, y) par un entraînement commun (21 à 24).

3. Dispositif selon la revendication 2 ou 3, dans lequel l'entraînement (21 à 24) comprend au moins deux arbres d'entraînement (21) verticaux, sur lesquels le support (30) est monté de façon excentrique.

4. Dispositif selon l'une des revendications 2 ou 3, dans lequel un poussoir (40) fait saillie perpendiculairement vers le bas, de chaque élément de table (11), poussoir dont l'extrémité frontale (41) repose sur une surface (46), inclinée par rapport au plan de la table (10), d'un élément support (45), et la direction de la ligne de pente de la surface (46) est réglable.

5. Dispositif selon l'une des revendications 2 à 5, **caractérisé, en ce que** l'amplitude de course (h) du mouvement oscillatoire vertical est réglable individuellement pour chaque élément de table (11).

6. Dispositif selon la revendication 1, **caractérisé en ce que** chaque élément de table (11) présente un dispositif d'entraînement (65) propre.

7. Dispositif selon l'une des revendications 1 à 6, **caractérisé en ce que** la course d'oscillation (a) dans les deux directions horizontales (x, y) est identique et, de préférence, réglable.

8. Dispositif selon l'une des revendications 1 à 7, **caractérisé en ce que** les mouvements oscillatoires effectués dans les deux directions horizontales (x, y) sont mutuellement déphasées de 90°, de sorte que les éléments de table (11) effectuent un mouvement dont la trajectoire est circulaire.

9. Dispositif selon l'une des revendications 1 à 8, **caractérisé en ce que** la fréquence des oscillations est réglable.

10. Dispositif selon l'une des revendications 1 à 9, **caractérisé en ce que** les éléments de table (11) ont un profil triangulaire, rectangulaire ou hexagonal.

11. Dispositif selon l'une des revendications 1 à 10, **caractérisé en ce que** l'ensemble des éléments de table (11) sont couverts par une feuille de couverture (47) flexible, commune, en particulier une feuille de matière synthétique, qui couvre les espaces intermédiaires (48) existant entre les éléments de table (11).
